# EUROPEAN PATENT SPECIFICATION

(11) **EP 4 658 967 B1**
(45) Date of publication and mention of the grant of the patent: **11.11.2026**
(21) Application number: 24700840.2
(22) Date of filing: 17.01.2024
(51) Int. Cl.: F28D 20/02

(54) **METHOD OF MANUFACTURING A LATENT HEAT STORAGE ELEMENT**
VERFAHREN ZUR HERSTELLUNG EINES LATENTWÄRMESPEICHERELEMENTES
PROCÉDÉ DE FABRICATION D'UN ÉLÉMENT D'ACCUMULATION DE CHALEUR LATENTE

(30) Priority: 31.01.2023 EP 23020050
(43) Date of publication of application: 10.12.2025
(73) Proprietor: REP IP AG, 6300 Zug (CH)
(72) Inventor: ROS, Nico, 4125 Riehen (CH); RETZKO, Stefan, 8037 Zürich (CH); ARDÜSER, Christian, 8640 Rapperswil (CH); CAMOUS, Manon, 8006 Zürich (CH)
(74) Representative: SONN Patentanwälte GmbH & Co KG
(86) International application number: PCT/IB2024/050440
(87) International publication number: WO 2024/161228

(56) References cited:
- EP-B1- 2 836 784
- WO-A1-2021/149078
- US-A1- 2012 107 662

## Description

The invention refers to a method of manufacturing a latent heat storage element. Further, the invention refers to a latent heat storage element obtained by said method and a transport container for transporting temperature sensitive goods that comprises a latent heat storage element. Publications EP 2 836 784 B1, US 2012/107662 A1, WO 2021/149078 A1 can be considered pertinent to the subject matter of the present invention.

Latent heat storage elements are passive temperature-control elements commonly used in various shipping applications in order to keep temperature sensitive goods within a predetermined temperature window. Latent heat storage elements are able to store thermal energy in phase change materials (PCMs), whose latent heat of fusion, heat of solution or heat of absorption is substantially higher than the heat they are able to store on account of their normal specific heat capacity. For example, PCMs are used as latent heat storage material in passively cooled pallet-size airfreight containers for the transportation of temperature sensitive goods.

PCMs have to be encapsulated in order to avoid leakage thereby contaminating the transported goods. In the case of typical cold packs, the PCM is encapsulated in a plastic shell having relatively thick walls. This is needed to avoid leakage by diffusion of the PCM through the encapsulation. In order to effectively control the temperature of the goods, latent heat storage elements are usually arranged within or along the walls of the shipping container. However, due to the thickness of the encapsulation, the walls of the shipping container cannot be optimized in terms of thickness. First, the thickness of the plastic encapsulation walls add to the container wall thickness. Second, since the cold packs are typically not completely filled with PCM and include plastic structures to insert the PCM and close the encapsulation, the cold packs cannot be arranged such that the PCM is continuously surrounding the interior space of the container. This reduces the amount of PCM in the container walls in relation to the wall thickness and leads to local thermal bridges where heat can by-pass the latent heat storage elements and enter into the interior space of the container.

To optimize the walls of the shipping container in terms of maximal PCM amount with minimal wall thickness and to avoid thermal bridges between cold packs, the walls of the encapsulation must be as thin as possible. However, thin walls do not prevent diffusion of the PCM through the walls.

Another important issue with the common encapsulation methods is that the low thermal conductivity of the PCM leads to local melting of the PCM if a non-uniform heat load is applied. Thus, the full potential of the PCM cannot be used. Additionally, the freezing and recharging process of the container takes longer and occurs less uniform because of the low thermal conductivity. To address this problem, it has already been proposed to combine the PCM with a highly heat conductive material, such as graphite or expanded graphite.

WO 2011/124624 A1 describes the production of a composite material comprising expanded graphite and PCM. After infiltration of the PCM the composite material is shredded with the PCM in solid or liquid state. Due to the shredding, the thermally conductive connections between graphite flakes in the expanded graphite plates are broken. This leads to a relatively low thermal conductivity for a given portion of graphite of the resulting composite material.

EP 2836784 B1 describes the infiltration of microencapsulated PCM into expanded graphite blanks. Further production steps, such as milling, cutting and outer encapsulation are not described. Microencapsulated PCM has a lower specific enthalpy compared to pure PCM. In order to be weight and volume efficient it is important, that the PCM is pure without the loss of gravimetric enthalpy density through microencapsulation. On the other hand, the infiltration of expanded graphite sheets with pure PCM as described in EP 2836784 B1 results in the composite graphite PCM elements being very brittle and difficult to handle for further production steps. In addition, there is leakage and diffusion of the PCM in liquid phase due to the lacking outer encapsulation.

Other methods include mixing graphite powder with PCM. Also here, the thermally conductive connections of graphite flakes, as present in expanded graphite plates, are missing. In order to still reach an acceptable thermal conductivity, the portion of graphite needs to be relatively high. For the application in transport containers, it is important to be as weight efficient as possible. High graphite portions lead to a low thermal energy density of the latent heat storage device.

Therefore, the instant invention aims at providing latent heat storage elements that solve the above problems. In particular, the latent heat storage elements shall prevent leakage including diffusion of the liquid PCM through its encapsulation without requiring thick walls. Further, the latent heat storage elements shall have a high thermal conductivity in order to avoid local melting of the PCM, while minimizing the amount of highly heat conductive material.

A production process for PCM composite latent heat storage elements shall be provided that are suitable for airfreight transportation containers of temperature sensitive goods and that have an increased weight and volume efficiency. The volumetric portion of the pure PCM shall be maximized. The PCM shall remain homogeneously distributed within the latent heat storage elements irrespective of the position in which they are stored or used. The encapsulation shall be space efficient: It shall be possible to place adjacent latent heat storage elements right next to each other without losing space due to encapsulation walls, foil welding seams or other elements which reduce the energy density for a given wall thickness of the transport container. It shall be possible to perform efficient serial production of the latent heat storage elements and to create latent heat storage elements having arbitrary shapes adapted for various application needs.

To solve these and other objects a first aspect of the invention provides a method of manufacturing a latent heat storage element comprising the following steps:
- providing a graphite sheet made of expanded graphite, the sheet having a sheet plane and comprising graphite layers that are oriented substantially parallel to the sheet plane so that the graphite sheet has a higher thermal conductivity in a direction parallel to the sheet plane than perpendicular thereto,
- infiltrating the graphite sheet with a phase change material, while the phase change material is in a liquid state, in order to obtain an infiltrated graphite sheet,
- cooling the infiltrated graphite sheet to a temperature below the melting point of the phase change material,
- cutting or milling the infiltrated graphite sheet to obtain at least one infiltrated graphite body,
- completely encapsulating each infiltrated graphite body by means of an encapsulation that is impermeable to the phase change material when in its liquid state.

The invention is based on the idea to contain the phase change material (PCM) in the interlayer space of expanded graphite, where capillary forces are strong enough to retain the PCM in its liquid state. This means that once the PCM is infiltrated in the expanded graphite, the outflow of PCM is minimized. As such graphite helps to contain the PCM and prevent leakage. Therefore, the outer encapsulation needs to only partly contribute to the encapsulation function of the latent heat storage element and can be designed accordingly. In particular, the outer encapsulation can do with a considerably reduced thickness when compared to prior art embodiments. Thus, the invention allows obtaining latent heat storage elements having a particularly high percentage of PCM based on the total volume of the latent heat storage element.

Further, arranging the PCM in the interlayer space of expanded graphite helps to guarantee that the PCM is homogeneously distributed within the encapsulation, and remains homogeneously distributed as time passes, irrespective of the position in which the encapsulation is stored or used. Indeed, commonly used encapsulations with cold packs have the disadvantage that the PCM can flow within the encapsulation if in the liquid state. This creates inhomogeneities and impacts the performance of the transport container in the long term.

Another advantage of expanded graphite as a primary encapsulation for PCM in transport containers is its achievable filling rate. As stated above, when PCM is used as a latent heat storage in transport containers, its encapsulation should take up as little space as possible. When encapsulating PCM using other encapsulation methods like cold packs, the volumetric filling rate is typically around 80% to 95%. When encapsulating PCM using expanded graphite with thin walls, a filling rate of >95% can be achieved.

Expanded graphite is characterized by a low weight and can have a thermal conductivity of theoretically up to 600 W/mK. Expanded graphite (also called exfoliated graphite) is produced by intercalating foreign components (intercalates) between the layers of graphite. Such expandable graphite intercalates are usually prepared by dispersing graphite particles in a solution containing an oxidizing agent and the gas compound to be intercalated. Commonly used oxidizing agents are nitric acid, potassium chlorate, chromic acid, potassium permanganate and the like. For example, concentrated sulfuric acid is used as the compound to be stored. The expandable graphite intercalation compounds undergo a strong increase in volume with expansion factors of more than 200 when heated to a temperature above the so-called onset temperature, which is caused by the fact that the intercalation compounds intercalated in the layer structure of the graphite are decomposed by the rapid heating to this temperature with the formation of gaseous substances, as a result of which the graphite layers are driven apart in an accordion-like manner, i.e. the graphite particles are expanded or inflated perpendicular to the layer plane.

A sheet of expanded graphite may be produced, for example, by compacting the fully expanded graphite under the directed action of a pressure, the layer planes of the graphite being arranged perpendicular to the direction of action of the pressure. This results in that the graphite layers of the graphite sheet are oriented substantially parallel to the sheet plane, leading to an anisotropic thermal conductivity. This is, the graphite sheet has a higher thermal conductivity in a direction parallel to the sheet plane than perpendicular thereto, which has the effect that thermal energy acting on the latent heat storage elements that are arranged to surround a transport chamber of a shipping container is evenly distributed over the entire periphery of the transport chamber. In contrast, the thermal conductivity of the graphite sheet is low in a direction perpendicular to the sheet plane, which significantly reduces the heat input into the transport chamber across the latent heat storage element.

Preferably, the thermal conductivity of the graphite sheet in a direction parallel to the sheet plane is at least 10 W/mK and the thermal conductivity of the graphite sheet perpendicular to the sheet plane is < 10W/mK, preferably < 5W/mK, more preferably < 1W/mK, such as between 0.2 W/mK and 10 W/mK.

Preferably, the expanded graphite sheet has a density of < 0.15 g/cm³.

Preferably, the graphite sheet has a thickness of 10-50mm.

The size of the expanded graphite sheet may range within the following dimensions: Length 80 to 800mm X Width 80 to 800mm X Thickness 10 to 50mm.

The PCM is introduced into the interlayer spaces of the expanded graphite sheet by infiltrating the graphite sheet with the PCM, while the phase change material is in a liquid state. This process is preferably carried out by placing the graphite sheet in a dipping vessel which is filled with liquid PCM. Therein, the PCM can infiltrate into the expanded graphite without the usage of vacuum. For a PCM having a melting point at 5°C the infiltration process can be performed at room temperature. For PCMs having melting points in the range of 15°C to 25°C the infiltration may be performed at a temperature of > 30°C, preferably > 35°C, in order to accelerate the process. More generally, the step of infiltrating is preferably carried out at a temperature of > 5°C, preferably > 10°C, above the melting point of the phase change material.

Preferably, the step of infiltrating is carried out until obtaining a filling rate of > 95 vol.-%, based on the total volume of the latent heat storage element.

Any type of PCM may be used for manufacturing the latent heat storage elements of the invention, in particular a PCM that performs a phase change from liquid to solid at a temperature required to be kept during the shipment of temperature sensitive goods, such as pharmaceutical products.

Preferably, the phase change material has a melting point of < 25°C. Preferably, the phase change material may have a melting point in the range of 2-10°C or 2-25°C or -82 to -72°C or -15 to -30°C.

Suitable PCMs comprise paraffine, such as n-hexadecane or n-tetradecane, ester, such as methyl ester, linear alcohol, ether, organic anhydrides, salt-hydrates, water-salt-mixtures, salt solutions and/or water-based solutions.

According to a preferred embodiment of the infiltration step, a plurality of graphite sheets may be subjected to the infiltration step in the dipping vessel filled with the PCM. The graphite sheets may be stacked in a support structure that comprises a plurality of separating elements or supporting trays for separating adjacent graphite sheets from one another. The support structure allows infiltrating a large number of graphite sheets simultaneously, thus saving time. Further, it allows keeping the graphite sheets separated from each other, thus facilitating the extraction of the infiltrated graphite sheets from the PCM bath. It also allows weighing down the entire stack of graphite sheets while preventing breakage of the sheets.

The separating elements or supporting trays of the support structure may preferably be designed as a grid or as a plate having through-holes to allow PCM to flow therethrough. The structure is preferably made from metal. The graphite sheets can be stacked either horizontally or vertically. Horizontal stacking is preferred as it facilitates handling of the infiltrated graphite sheets.

Preferably, the graphite sheets are placed onto the support structure while the support structure is located outside of the dipping vessel. For carrying out the infiltration step, the support structure together with the graphite sheets is placed into the dipping vessel.

After having placed the graphite sheets onto the support structure (inside or outside of the dipping vessel) and weighed down to prevent floating, the dipping vessel is filled with liquid PCM. The graphite sheets preferably remain covered with liquid PCM for the whole duration of the infiltration. Since most of the infiltration takes place during the first hour, topping up of the dipping vessel may be necessary. The graphite sheets may preferably be left in the PCM bath for 24 hours. This duration allows achieving a filling rate of > 95%.

After the infiltration step the infiltrated graphite sheets are removed from the PCM bath. They may preferably be drained from the excess PCM arranged on the surface. This can be done by placing the infiltrated graphite sheets on a flat surface for about 30 minutes, or by letting the sheets drip for around 10 minutes while still being placed in the support structure.

Having the graphite sheets arranged on separating elements during at least one of the steps of infiltrating, dripping off excess PCM and removing of the sheet from the dipping vessel provides support to the graphite sheets which generally are very brittle and difficult to handle.

After the infiltration step the method of the invention provides for a step of cooling the infiltrated graphite sheet to a temperature below the melting point of the phase change material. Preferably, said step of cooling is carried out to a temperature of > 5°C, preferably > 10°C, below the melting point of the phase change material. In this way, the PCM is transformed into its solid state, thereby providing stability to the infiltrated graphite sheet which facilitates further handling of the sheets, prevents breakage and allows for subsequent manufacturing steps.

The manufacturing steps comprise cutting or milling the infiltrated graphite sheet to obtain at least one infiltrated graphite body. Cutting and/or milling of the infiltrated graphite sheets is needed in order to obtain graphite bodies of a desired shape or size. The steps of cutting and milling ensure that the thermally conductive graphite flake connections within the expanded graphite sheet remain intact. Shredding and re-shaping the infiltrated graphite elements would destroy the graphite flake connections and results in composite material having a lower thermal conductivity.

Thereafter, the infiltrated graphite sheet is enclosed in an encapsulation that is impermeable to the phase change material when in its liquid state, wherein the encapsulation comprises, or consists of, an oil tight foil. The encapsulation is designed so as to completely surround and seal the infiltrated graphite sheet.

In order to ensure a tight and space efficient encapsulation and to avoid leakage and diffusion of PCM through the encapsulation the encapsulation is preferably carried out under a vacuum of < 100mbar.

According to the invention, the encapsulation comprises, or consists of, a foil, preferably a multi-layer foil comprising at least one aluminum layer and at least one sealable layer, such as polyethylene, in particular LD-PE or HD-PE. The sealable layer may be configured to be sealable, e.g., by welding.

The foil is folded such that welding seams are not arranged on the side faces, but on the top and/or bottom face of the latent heat storage element, so as not to hinder a tight placement of the latent heat storage elements against each other in a heat exchanging manner. Herein, the top and the bottom faces of the latent heat storage element are understood to extend parallel to the sheet plane, while the side faces extend to connect the top face with the bottom face.

Preferably, the foil, in particular the multi-layer foil, has a thickness of 0.01 mm to 0.5 mm.

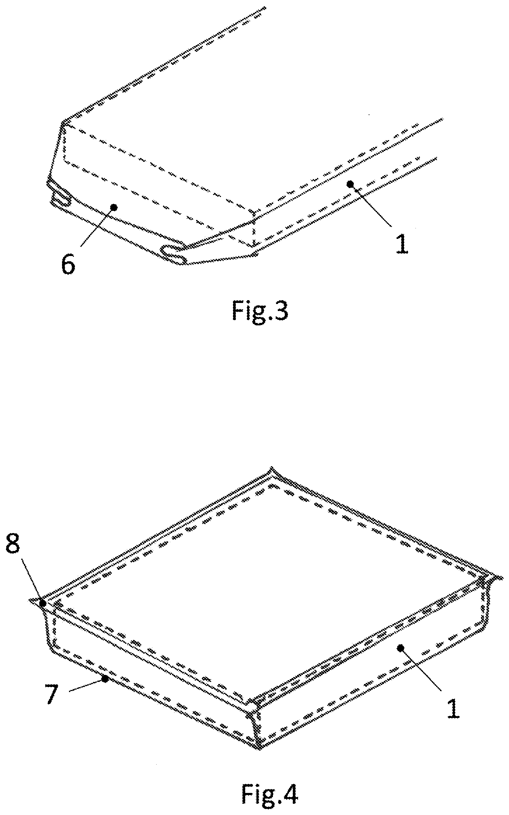

The encapsulation with a multi-layer composite foil containing at least one layer of aluminum may comprise the following steps:
- Creation of a foil tube.
- Insert the infiltrated graphite sheet into the foil tube with the PCM being in a solid state. The foil tube should fit tightly around the graphite sheet, leaving minimal gaps between the graphite sheet and the tube.
- Fold-in corners to avoid overhang of welding seams (see Fig. 3)
- Weld one side, as close as possible to the edge of the graphite sheet
- Create a vacuum (<100mbar)
- Weld the other side while maintaining the vacuum
- Release vacuum
- Fix overhanging foil against the graphite sheet to allow for placement of graphite sheets against each other

Also discloses is an embodiment, in which the encapsulation comprises a bottom shell, preferably obtained by thermoforming, and an upper foil closing the encapsulation by being sealingly connected, preferably welded, to the bottom shell. For example, the upper foil may be bonded to the rim of the bottom shell by welding or by an adhesive. Preferably, the sealing or welding may be carried out under a vacuum of < 100mbar.

According to a preferred embodiment, the bottom shell has a wall thickness of 0.2mm to 2mm and the upper foil has a thickness of 0.01mm to 0.5mm.

The encapsulation in thermoformed plastic encapsulation may comprise the following steps:
- Thermoforming of bottom shell
- Insert infiltrated graphite sheet into the bottom shell, with the PCM being in a solid state
- Create vacuum (<100mbar)
- Weld upper foil to the rim of the bottom shell to close the bottom shell
- Release vacuum

According to a second aspect the invention provides a latent heat storage element obtained by a method according to the first aspect of the invention. The latent heat storage element thus comprises or consists of a graphite sheet made of expanded graphite that is infiltrated with a phase change material and completely encapsulated with an encapsulation that is impermeable to the phase change material when in its liquid state.

Preferably, the thermal conductivity of the latent heat storage element in a direction parallel to the sheet plane is at least 10 W/mK, and the thermal conductivity of the latent heat storage element perpendicular to the sheet plane is < 10W/mK, preferably < 5W/mK, more preferably < 1W/mK, such as between 0.2 W/mK and 10 W/mK.

According to a third aspect the invention provides a transport container for transporting temperature sensitive goods comprising walls that enclose a transport chamber on all sides thereof, wherein at least one of said walls comprises a latent heat storage element according to the second aspect of the invention.

Preferably, the latent heat storage element is arranged so that its sheet plane extends parallel to a wall plane of the associated wall.

Preferably, each of said walls comprises a latent heat storage element and the latent heat storage elements of adjacent walls are arranged to contact one another, in order to allow thermal energy acting thereon to be distributed over the entire periphery of the transport chamber.

The latent heat storage elements preferably surround the transport chamber of the transport container on all sides and without gaps. The latent heat storage elements thus form, for example, an envelope in which the transported goods are located. In the case of a cuboid transport container, each of the six container walls preferably comprises a latent heat storage element or a plurality of adjoining latent heat storage elements, so that said envelope is composed of six planes of latent heat storage elements arranged in a cuboid shape. The latent heat storage elements, in particular their edge regions, are preferably in direct contact with each other, so that heat equalization occurs around the entire transport chamber, whereby heat can be conducted via the envelope of latent heat storage elements, for example from one side of the transport chamber to an opposite side.

Preferably, the walls comprise a plurality of layers arranged one over another, a first layer being formed by at least one of said latent heat storage elements and a second layer being a thermal insulation layer that has a thermal conductivity perpendicular to the wall plane of < 0,04 W/mK, preferably < 0,01 W/mK.

Preferably, the thermal insulation layer can be vacuum panels, polyisocyanurate (PIR), expanded polystyrene (EPS), polystyrene extruded foam (XPS), or ISOPET. An ISOPET panel is understood to refer to an insulation panel with a multilayer, honeycomb arrangement of foils, which have a metallic coating with a very low emissivity (in particular an emissivity of < 0.2, preferably 0.02-0.09), wherein air, a gas with a low thermal conductivity, such as krypton or xenon, is located in the cavities between the foils or the cavities are evacuated. Such an insulation panel is described in WO 2012/142639 A1.

The transport container according to the invention is preferably designed as an air freight container and therefore preferably has external dimensions of at least 0.4x0.4x0.4 m³, preferably 0.4x0.4x0.4 m³ to 1.6x1.6x1.6 m³, preferably 1.0x1.0x1.0 m³ to 1.6x1.6x1.6 m³.

In the following, the invention will be described in more detail with reference to exemplary embodiments shown in the figures. Therein,
- Fig. 1 shows the internal structure of an expanded graphite sheet,
- Fig. 2 shows graphite sheets arranged in a support structure before being placed in a PCM bath,
- Fig. 3 shows a cooled infiltrated graphite sheet encapsulated in a tight foil,
- Fig. 4 shows a variant not forming part of the invention,
- Fig. 5 shows a flow chart of the manufacturing method according to the invention, and
- Fig. 6 shows a transport container with latent heat storage elements as described in the invention.

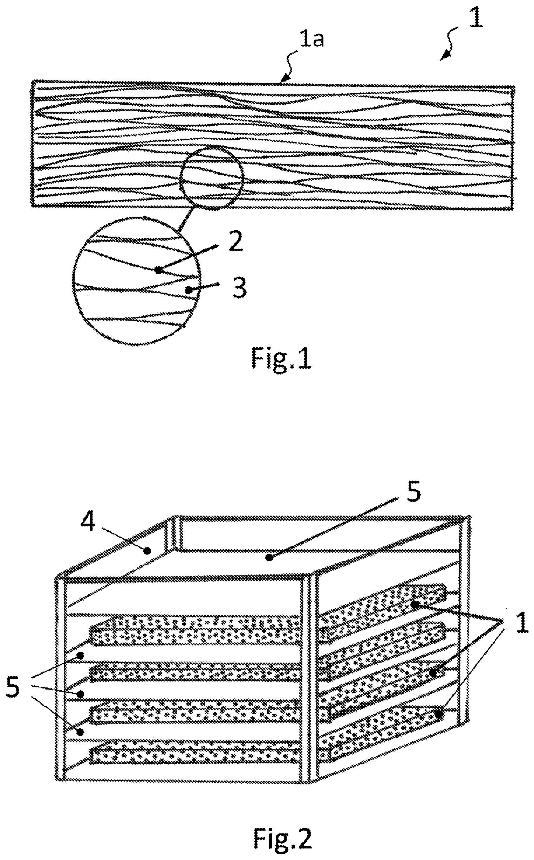

Fig. 1 shows the internal structure of a graphite sheet 1 made of expanded graphite that is used in the invention. The graphite sheet 1 comprises graphite layers that are oriented substantially parallel to the sheet plane 1a. In particular, the internal structure comprises thermally conductive graphite flake connections 2 and the interlayer spaces 3 arranged therebetween. The graphite content of the graphite sheet 1 may be in the range of 92-96 vol-%, based on the total volume of the graphite sheet 1. Thus, the void content of the graphite sheet 1 is in the range of 4-8 vol.-%.

As shown in Fig. 2 a plurality of graphite sheets are arranged in a support structure 4 before being placed in a PCM bath. The support structure 4 comprises a frame and a plurality of parallel separating elements, such as supporting trays 5, on which the graphite sheets are each deposited.

Fig. 3 shows an embodiment of encapsulating the infiltrated graphite sheet. The encapsulation comprises a foil 6 that is impermeable for the liquid PCM, wherein the foil 6 is in a tubular shape surrounding the graphite sheet and wherein corner regions of the foil 6 that protrude from the graphite sheet are appropriately folded in. The super-imposed foil regions at the open end of the tubular foil 6 are joined by means of a welding seam, wherein the welding seam is arranged such that it comes to lie on the top face or the bottom face of the latent heat storage element rather than on the side faces after having folded and fixed the overhanging foil back onto the element.

Fig. 4 shows a variant not forming part of the invention, wherein the infiltrated graphite sheet 1 is placed in a thermoformed lower shell 7 which is closed by an upper foil 8, which is sealed along the circumference under a vacuum of <100mbar.

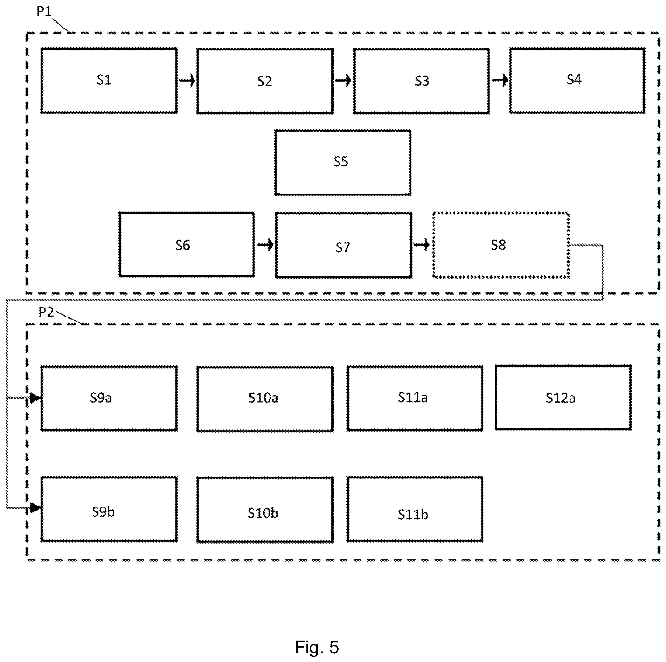

The manufacturing method of the invention is illustrated in Fig. 5 and comprises the process P1 of infiltrating the graphite sheet(s) and the process P2 of encapsulating the infiltrated graphite sheet(s).

The process P1 comprises the following steps:

| | |
|---|---|
| S1: | Preparing the graphite sheets, such as by cutting to size |
| S2: | Placing the graphite sheets in a support structure |
| S3: | Placing the support structure in a dipping vessel |
| S4: | Filling the dipping vessel with liquid PCM |
| S5: | Waiting 24 hours |
| S6: | Removing the infiltrated graphite sheets from the PCM bath and draining excess PCM |
| S7: | Cooling the infiltrated graphite sheets |
| S8: | Cutting or milling the infiltrated graphite sheets with the PCM being in solid state. |

The process P2 comprises the following steps:

| | |
|---|---|
| S9a: | Cutting and welding a tubular foil tightly around the infiltrated graphite sheet |
| S10a: | Folding in the corners and welding the tubular foil on one open end thereof |
| S11a: | Creating a vacuum and welding the tubular foil on the other open end thereof |
| S12a: | Fixing the overhanging foil against the top or bottom side of the element. |

Alternatively and not forming part of the invention:

| | |
|---|---|
| S9b: | Thermoforming a bottom shell of the encapsulation |
| S10b: | Inserting the infiltrated graphite sheet |
| S11b: | Creating a vacuum and welding the upper foil onto the bottom shell. |

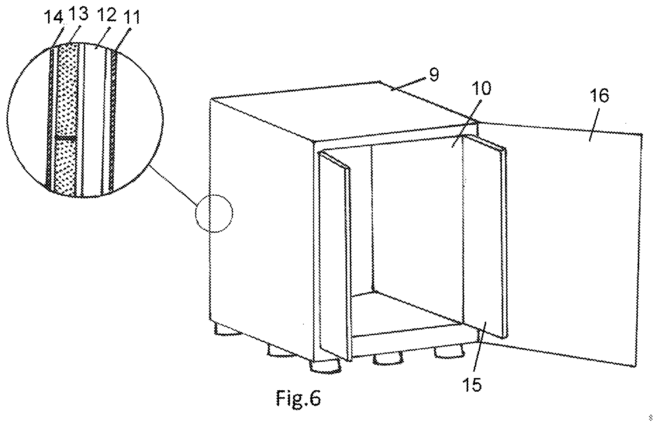

Fig. 6 shows a transport container made of a cuboid chamber 9 comprising walls 10 that surround an interior space of the container on all side except of an opening. The opening can be closed by inner doors 15 and an outer door 16. The walls 10 all comprise the same arrangement of layers: an inner lining 11, a layer comprising latent heat storage elements 12 according to the invention, an insulation 13 and an outer lining 14.

## Claims

1. Method of manufacturing a latent heat storage element (12) comprising the following steps:
- providing a graphite sheet (1) made of expanded graphite, the sheet (1) having a sheet plane (1a) and comprising graphite layers that are oriented substantially parallel to the sheet plane (1a) so that the graphite sheet (1) has a higher thermal conductivity in a direction parallel to the sheet plane than perpendicular thereto,
- infiltrating the graphite sheet (1) with a phase change material, while the phase change material is in a liquid state, in order to obtain an infiltrated graphite sheet (1),
- cooling the infiltrated graphite sheet (1) to a temperature below the melting point of the phase change material,
- cutting or milling the infiltrated graphite sheet (1) to obtain at least one infiltrated graphite body,
- completely encapsulating each infiltrated graphite body by means of an encapsulation that is impermeable to the phase change material when in its liquid state **characterized in that** the encapsulation comprises, or consists of, a foil (6), preferably a multi-layer foil comprising at least one aluminum layer and at least one layer sealable by welding, such as polyethylene, in particular LD-PE or HD-PE, wherein the infiltrated graphite body is subjected to a vacuum, preferably to a pressure of < 100mbar, during said step of encapsulating and wherein the foil (6) is folded such that welding seams are not arranged on the side faces, but on the top and/or bottom face of the latent heat storage element.

2. Method according to claim 1, wherein the expanded graphite sheet (1) has a thermal conductivity of > 10W/mK in a direction parallel to the sheet plane (1a).

3. Method according to claim 1 or 2, wherein the expanded graphite sheet (1) has a thermal conductivity of < 10W/mK, preferably < 5W/mK, more preferably < 1W/mK, in a direction perpendicular to the sheet plane (1a).

4. Method according to claim 1, 2 or 3, wherein the expanded graphite sheet (1) has a density of < 0.15 g/cm³.

5. Method according to any one of claims 1 to 4, wherein the phase change material has a melting point of < 25°C.

6. Method according to any one of claims 1 to 5, wherein said step of infiltrating is carried out at a temperature of > 5°C, preferably > 10°C, above the melting point of the phase change material.

7. Method according to any one of claims 1 to 6, wherein said step of infiltrating is carried out until obtaining a filling rate of > 95 vol.-%, based on the total volume of the latent heat storage element (12).

8. Method according to any one of claims 1 to 7, wherein the graphite sheet (1) is placed on a support structure (4), in particular a grid or a supporting tray (5), which is introduced into a dipping vessel for carrying out the infiltration step.

9. Method according to any one of claims 1 to 8, wherein said step of cooling is carried out to a temperature of > 5°C, preferably > 10°C, below the melting point of the phase change material.

10. Method according to any one of claims 1 to 9, wherein the phase change material comprises, or consists of, paraffine, such as n-hexadecane or n-tetradecane, ester, such as methyl ester, linear alcohol, ether, organic anhydrides, salt-hydrates, water-salt-mixtures, salt solutions and/or water-based solutions.

11. Method according to any one of claims 1 to 10, wherein the foil (6), in particular the multi-layer foil, has a thickness of 0.01 mm to 0.5 mm.

12. Latent heat storage element (12) obtained by a method according to any one of claims 1 to 11.

13. A transport container for transporting temperature sensitive goods comprising walls (10) that enclose a transport chamber (9) on all sides thereof, wherein at least one of said walls (10) comprises a latent heat storage element (12) according to claim 12.

14. Transport container according to claim 13, wherein the latent heat storage element (12) is arranged so that its sheet plane (1a) extends parallel to a wall plane of the wall (10).

15. Transport container according to claim 14, wherein each of said walls (10) comprises a latent heat storage element (12) and the latent heat storage elements (12) of adjacent walls (10) are arranged to contact one another, in order to allow thermal energy acting thereon to be distributed over the entire periphery of the transport chamber (9).

16. Transport container according to claim 13, 14 or 15, wherein the walls (10) comprise a plurality of layers arranged one over another, a first layer being formed by said latent heat storage element (12) and a second layer being a thermal insulation layer (13) that has a thermal conductivity perpendicular to the wall plane of < 0,04 W/mK, preferably < 0,01 W/mK.

## Patentansprüche

1. Verfahren zur Herstellung eines Latentwärmespeicherelements (12), umfassend die folgenden Schritte:
- Bereitstellen einer Graphitplatte (1) aus expandiertem Graphit, wobei die Platte (1) eine Plattenebene (1a) aufweist und Graphitschichten umfasst, die im Wesentlichen parallel zu der Plattenebene (1a) orientiert sind, so dass die Graphitplatte (1) in einer Richtung parallel zu der Plattenebene eine höhere Wärmeleitfähigkeit aufweist als senkrecht dazu,
- Infiltrieren der Graphitplatte (1) mit einem Phasenwechselmaterial, während sich das Phasenwechselmaterial in einem flüssigen Zustand befindet, um eine infiltrierte Graphitplatte (1) zu erhalten,
- Abkühlen der infiltrierten Graphitplatte (1) auf eine Temperatur unterhalb des Schmelzpunkts des Phasenwechselmaterials,
- Schneiden oder Fräsen der infiltrierten Graphitplatte (1), um mindestens einen infiltrierten Graphitkörper zu erhalten,
- vollständiges Einkapseln jedes infiltrierten Graphitkörpers mittels einer Einkapselung, die für das Phasenwechselmaterial in seinem flüssigen Zustand undurchlässig ist, **dadurch gekennzeichnet, dass** die Einkapselung eine Folie (6), vorzugsweise eine Mehrschichtfolie, umfassend mindestens eine Aluminiumschicht und mindestens eine durch Schweißen siegelbare Schicht, wie beispielsweise Polyethylen, insbesondere LD-PE oder HD-PE, umfasst oder daraus besteht, wobei der infiltrierte Graphitkörper während des besagten Schritts des Einkapselns einem Vakuum, vorzugsweise einem Druck von < 100 mbar, ausgesetzt wird und wobei die Folie (6) derart gefaltet ist, dass Schweißnähte nicht an den Seitenflächen, sondern an der oberen und/oder unteren Fläche des Latentwärmespeicherelements angeordnet sind.

2. Verfahren nach Anspruch 1, wobei die expandierte Graphitplatte (1) eine Wärmeleitfähigkeit von > 10 W/mK in einer Richtung parallel zu der Plattenebene (1a) aufweist.

3. Verfahren nach Anspruch 1 oder 2, wobei die expandierte Graphitplatte (1) eine Wärmeleitfähigkeit von < 10 W/mK, vorzugsweise < 5 W/mK, weiter bevorzugt < 1 W/mK, in einer Richtung senkrecht zu der Plattenebene (1a) aufweist.

4. Verfahren nach Anspruch 1, 2 oder 3, wobei die expandierte Graphitplatte (1) eine Dichte von < 0,15 g/cm3 aufweist.

5. Verfahren nach einem der Ansprüche 1 bis 4, wobei das Phasenwechselmaterial einen Schmelzpunkt von < 25 °C aufweist.

6. Verfahren nach einem der Ansprüche 1 bis 5, wobei der besagte Schritt des Infiltrierens bei einer Temperatur von > 5 °C, vorzugsweise > 10 °C, oberhalb des Schmelzpunkts des Phasenwechselmaterials durchgeführt wird.

7. Verfahren nach einem der Ansprüche 1 bis 6, wobei der besagte Schritt des Infiltrierens durchgeführt wird, bis ein Füllgrad von > 95 Vol.-%, bezogen auf das Gesamtvolumen des Latentwärmespeicherelements (12), erhalten wird.

8. Verfahren nach einem der Ansprüche 1 bis 7, wobei die Graphitplatte (1) auf einer Trägerstruktur (4), insbesondere einem Gitter oder einer Trägerwanne (5), platziert wird, welche zur Durchführung des Infiltrationsschritts in ein Tauchgefäß eingebracht wird.

9. Verfahren nach einem der Ansprüche 1 bis 8, wobei der besagte Schritt des Abkühlens auf eine Temperatur von > 5 °C, vorzugsweise > 10 °C, unterhalb des Schmelzpunkts des Phasenwechselmaterials durchgeführt wird.

10. Verfahren nach einem der Ansprüche 1 bis 9, wobei das Phasenwechselmaterial Paraffin, wie beispielsweise n-Hexadecan oder n-Tetradecan, Ester, wie beispielsweise Methylester, linearen Alkohol, Ether, organische Anhydride, Salzhydrate, Wasser-SalzMischungen, Salzlösungen und/oder wasserbasierte Lösungen umfasst oder daraus besteht.

11. Verfahren nach einem der Ansprüche 1 bis 10, wobei die Folie (6), insbesondere die Mehrschichtfolie, eine Dicke von 0,01 mm bis 0,5 mm aufweist.

12. Latentwärmespeicherelement (12), erhalten durch ein Verfahren nach einem der Ansprüche 1 bis 11.

13. Transportbehälter zum Transportieren von temperaturempfindlichen Gütern, umfassend Wände (10), die eine Transportkammer (9) auf allen ihren Seiten umschließen, wobei mindestens eine der besagten Wände (10) ein Latentwärmespeicherelement (12) nach Anspruch 12 umfasst.

14. Transportbehälter nach Anspruch 13, wobei das Latentwärmespeicherelement (12) derart angeordnet ist, dass sich seine Plattenebene (1a) parallel zu einer Wandebene der Wand (10) erstreckt.

15. Transportbehälter nach Anspruch 14, wobei jede der besagten Wände (10) ein Latentwärmespeicherelement (12) umfasst und die Latentwärmespeicherelemente (12) benachbarter Wände (10) derart angeordnet sind, dass sie einander kontaktieren, um zu ermöglichen, dass darauf einwirkende thermische Energie über den gesamten Umfang der Transportkammer (9) verteilt wird.

16. Transportbehälter nach Anspruch 13, 14 oder 15, wobei die Wände (10) eine Vielzahl von Schichten umfassen, die übereinander angeordnet sind, wobei eine erste Schicht durch das besagte Latentwärmespeicherelement (12) gebildet ist und eine zweite Schicht eine Wärmedämmschicht (13) ist, die eine Wärmeleitfähigkeit senkrecht zu der Wandebene von < 0,04 W/mK, vorzugsweise < 0,01 W/mK, aufweist.

## Revendications

1. Procédé de fabrication d'un élément de stockage de chaleur latente (12) comprenant les étapes suivantes :
- fourniture d'une feuille de graphite (1) en graphite expansé, la feuille (1) présentant un plan de feuille (1a) et comprenant des couches de graphite qui sont orientées sensiblement parallèlement au plan de feuille (1a), de telle sorte que la feuille de graphite (1) présente une conductivité thermique plus élevée dans une direction parallèle au plan de feuille que perpendiculairement à celui-ci,
- infiltration de la feuille de graphite (1) avec un matériau à changement de phase, pendant que le matériau à changement de phase est à l'état liquide, afin d'obtenir une feuille de graphite infiltrée (1),
- refroidissement de la feuille de graphite infiltrée (1) à une température inférieure au point de fusion du matériau à changement de phase,
- découpe ou fraisage de la feuille de graphite infiltrée (1) pour obtenir au moins un corps en graphite infiltré,
- encapsulation complète de chaque corps en graphite infiltré au moyen d'une encapsulation qui est imperméable au matériau à changement de phase lorsqu'il est à son état liquide, **caractérisé en ce que** l'encapsulation comprend, ou est constituée de, un film (6), de préférence un film multicouche comprenant au moins une couche d'aluminium et au moins une couche scellable par soudage, telle qu'en polyéthylène, en particulier en LD-PE ou HD-PE, dans lequel le corps en graphite infiltré est soumis à un vide, de préférence à une pression de < 100 mbar, pendant ladite étape d'encapsulation, et dans lequel le film (6) est plié de telle sorte que des cordons de soudure ne soient pas disposés sur les faces latérales, mais sur la face supérieure et/ou inférieure de l'élément de stockage de chaleur latente.

2. Procédé selon la revendication 1, dans lequel la feuille de graphite expansé (1) présente une conductivité thermique de > 10 W/mK dans une direction parallèle au plan de feuille (1a).

3. Procédé selon la revendication 1 ou 2, dans lequel la feuille de graphite expansé (1) présente une conductivité thermique de < 10 W/mK, de préférence < 5 W/mK, plus préférablement < 1 W/mK, dans une direction perpendiculaire au plan de feuille (1a).

4. Procédé selon la revendication 1, 2 ou 3, dans lequel la feuille de graphite expansé (1) présente une masse volumique de < 0,15 g/cm³.

5. Procédé selon l'une quelconque des revendications 1 à 4, dans lequel le matériau à changement de phase présente un point de fusion de < 25 °C.

6. Procédé selon l'une quelconque des revendications 1 à 5, dans lequel ladite étape d'infiltration est réalisée à une température de > 5 °C, de préférence > 10 °C, au-dessus du point de fusion du matériau à changement de phase.

7. Procédé selon l'une quelconque des revendications 1 à 6, dans lequel ladite étape d'infiltration est réalisée jusqu'à l'obtention d'un taux de remplissage de > 95 % en volume, par rapport au volume total de l'élément de stockage de chaleur latente (12).

8. Procédé selon l'une quelconque des revendications 1 à 7, dans lequel la feuille de graphite (1) est placée sur une structure de support (4), en particulier une grille ou un plateau de support (5), qui est introduite dans un récipient d'immersion pour réaliser l'étape d'infiltration.

9. Procédé selon l'une quelconque des revendications 1 à 8, dans lequel ladite étape de refroidissement est réalisée jusqu'à une température de > 5 °C, de préférence > 10 °C, en dessous du point de fusion du matériau à changement de phase.

10. Procédé selon l'une quelconque des revendications 1 à 9, dans lequel le matériau à changement de phase comprend, ou est constitué de, paraffine, telle que le n-hexadécane ou le n-té-tradécane, ester, tel que l'ester méthylique, alcool linéaire, éther, anhydrides organiques, hydrates de sel, mélanges eau-sel, solutions salines et/ou solutions à base d'eau.

11. Procédé selon l'une quelconque des revendications 1 à 10, dans lequel le film (6), en particulier le film multicouche, présente une épaisseur de 0,01 mm à 0,5 mm.

12. Élément de stockage de chaleur latente (12) obtenu par un procédé selon l'une quelconque des revendications 1 à 11.

13. Conteneur de transport pour transporter des marchandises sensibles à la température comprenant des parois (10) qui entourent une chambre de transport (9) sur tous ses côtés, dans lequel au moins l'une desdites parois (10) comprend un élément de stockage de chaleur latente (12) selon la revendication 12.

14. Conteneur de transport selon la revendication 13, dans lequel l'élément de stockage de chaleur latente (12) est disposé de telle sorte que son plan de feuille (1a) s'étende parallèlement à un plan de paroi de la paroi (10).

15. Conteneur de transport selon la revendication 14, dans lequel chacune desdites parois (10) comprend un élément de stockage de chaleur latente (12) et les éléments de stockage de chaleur latente (12) de parois (10) adjacentes sont disposés pour être en contact les uns avec les autres, afin de permettre à l'énergie thermique agissant sur ceux-ci d'être répartie sur toute la périphérie de la chambre de transport (9).

16. Conteneur de transport selon la revendication 13, 14 ou 15, dans lequel les parois (10) comprennent une pluralité de couches disposées les unes sur les autres, une première couche étant formée par ledit élément de stockage de chaleur latente (12) et une deuxième couche étant une couche d'isolation thermique (13) qui présente une conductivité thermique perpendiculaire au plan de paroi de < 0,04 W/mK, de préférence < 0,01 W/mK.
